# EUROPEAN PATENT APPLICATION

(11) **EP 0 737 017 A2**
(43) Date of publication of application: **09.10.1996**
(21) Application number: 96500032.6
(22) Date of filing: 13.03.1996
(51) Int. Cl.: H04Q 3/42

(54) **Digital control unit for electromechanical telefon exchanges**

(30) Priority: 03.04.1995 ES 9500663
(71) Applicant: TELEFONICA DE ESPANA, S.A., E-28013 Madrid (ES)
(72) Inventor: Pozas Alvarez, José Antonio, 28043 Madrid (ES); Marmisa Gazo, Luis José, 28043 Madrid (ES); Pena Melian, Jes s, 28043 Madrid (ES); Congosto Martinez, Ma. Luz, 28043 Madrid (ES)
(74) Representative: Sanchez del Campo Gonzalez de Ubierna, Ramon

(57) **Abstract**

It is consisted of a plurality of circuit boards, functionally arranged in a modular way, including a control microprocessor, and the circuits being constituted, on the one hand, by management elements of the control system, and on the other hand, by madiatory elements between the control system and the own electromechanical stations, being managed by the microprocessor performing general purpose programs, as per the requirements of the software architecture.

## Description

### BACKGROUND OF THE INVENTION

The present specification relates to a patent of invention concerning a digital control unit for electromechanical stations, fitted with physical and logic resources, the purpose of which is to performing link signaling, supervising and operating functions of the electromechanical station, in order to obtain from these stations similar services to those of an electronic station.

### FIELD OF THE INVENTION

This invention will find application in the telecommunications field, and, in a most definite way, forming a part of the telephone stations with electromechanical systems of calling transfers.

### RELATED ART

On the electromechanical systems used at present, it is not feasible to implement, in a generalized manner, new services making them suitable to the requirements of the network and its development.

In order to make easy the identification of elements and functions for this type of stations, a set of figures has been included, which specify, in the case of the PC-1000 and ARF station, the different - parts participating in the calling control, so that it will be possible to notice the problems they present in front of changes improving the network services.

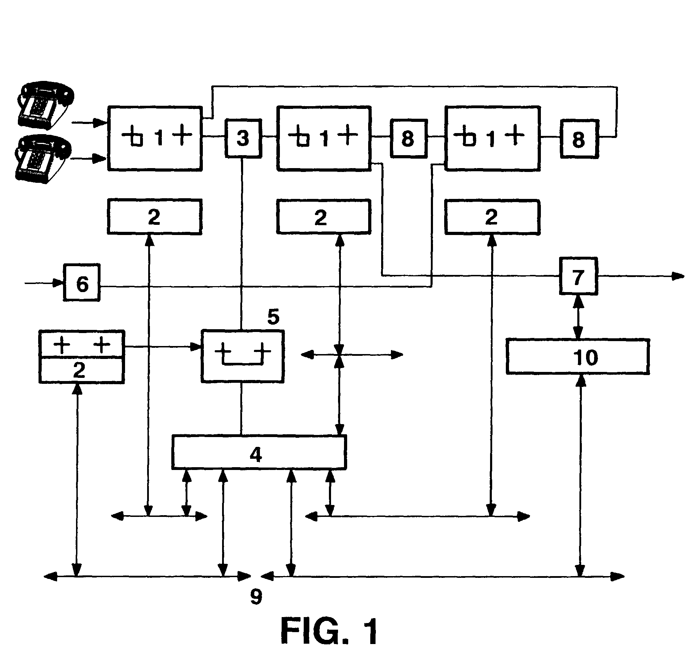

Figure 1 shows the architecture of the system PC-1000, with a structure of two group selecting stages, which is suitable for high capacity stations. The functional character of the electromechanical elements of the system is as follows:
- Line and group selecting stages (1): these elements are configured by crossed bar selector frames. Each stage is composed of selecting elements (1), each of which has two markers associated (2), which are responsible for the control of the selecting elements (1).
- Recorder links (3): allowing the control unit (4) to accede to theline and link signaling, for being treated.
- Recorder searcher (5): performing an appropiate concentration of the inner link elements toward the recorders.
- Arrival links (6):allowing this circuit to connect the switching system to arrival links, of EM/MP and CC/MF type.
- Output links (7): this circuit makes possible the connection of the switching system to output links, of EM/MF and CC/MF type.
- Wire m cutting relays and feeders (8): making possible to establish circuits towards the subscriber of the own station, via local and arrival calls, and providing the subscriber line feed, as well as the calling current.
- Connecting beam tracks (9): the communication of the control unit (4) with the markers (2) is carried out by means of these tracks. Thru them, the subscriber and link categories are obtained, and the establishment of circuits in the line and group selecting stages are controlled. These elements perform the transfer of the tariff type to the output links (7), which rate by using, thereby, the rater (10).

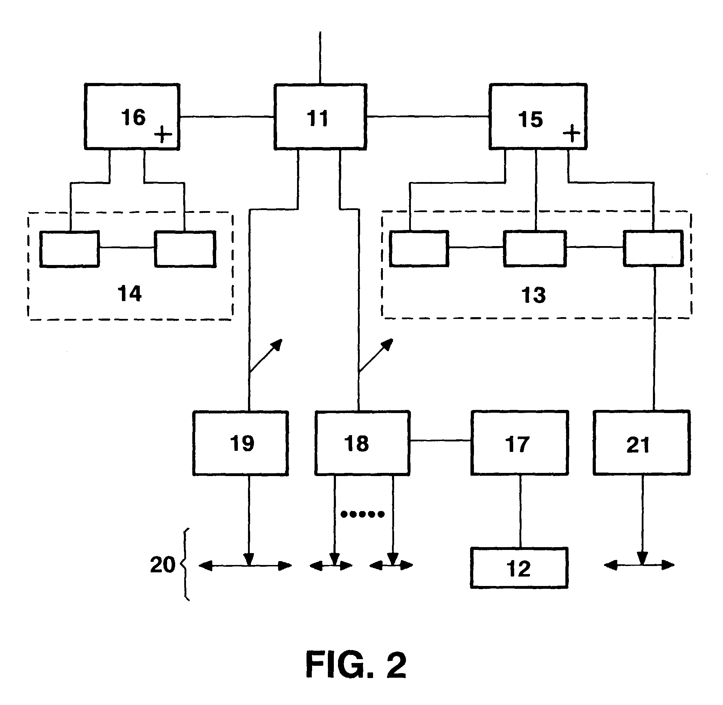

The control unit (4) includes all the elements for treating the signaling in the establishment stage. The structure of this block is - shown in Fig. 2, which includes the following electromechanical elements.
- Electromechanical recorder (11): this element controls the treatment of the signaling, the categories and the establishment of circuits, and for it, it relays on the rest of the elements of the control unit.
- Translator (12): it determines the routing of the call and the tariff rate according to the data provided by the recorder.
- Transmitters (13) and receivers (14): they are responsible for transmitting and receiving the link signaling.
- Auxiliary searching elements: both the transmitter searchers (15) and the receiver searchers (16) perform an appropiate concentration of the transmitting and receiving elements, so that the recorders (11) can accede to a free element.

In a similar manner, the translator searcher (17) allows the recorder (11) to accede to the translators (12), and the selecting (18) and preselecting (19) connectors multiplex the outputs of the groups of electromechanical recorders to the connecting bean tracks (20), and there is also a connection to these tracks of the transmitters (13) by means of the transmitter connector (21).

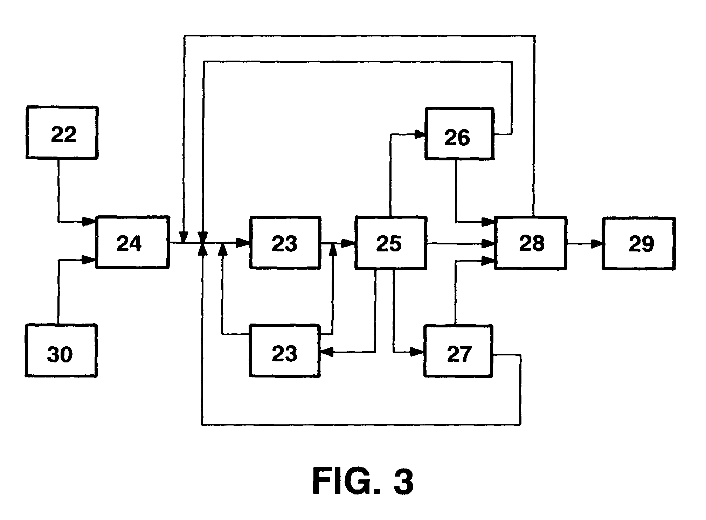

As shown in Fig. 3, the call treatment is carried out in stages and, depending on the type of same (local, outgoing, incoming, in transit), it involves the different elements of the station. The call stages are as follows:
- Preselection of line (22) or link (30): as a consequence of the calling subscriber picking up, or the intake of the arrival - link, the intake of the recorder of the local/output or arrival/ transit chain is produced.

The electromechanical system establishes a physical circuit between the terminals of the line or the arrival link, and the recorder taken.

Once this stage has been carried out, the recorder accedes to an input circuit to the stage of group selection (23).
- Cipher reception (24): the recorder taken by the call, receives the signaling of subscriber, or the arrival link, necessary for establishing the call.
- Group selection (23): according to the routing of the call, the recorder proceeds to the establishment of a mesh thru the selecting stage of group. This task is carried out by the marker under control of the recorder, this latter providing the corresponding marking codes.
- Wire "m" cut (25): the interlock of the mesh established in the selection stage of group (23) is carried out by cutting the wire "m", which is a circle located at the output of the group selection stage (23), so allowing the control commands sent by the recorder in later stages to be performed by the electromechanical elements located at the output of the wire "m" cutting circuit (25).
- Line selection (26): this stage ia applicable to the local and ingoing calls, and on it the recorder establishes the connection towards the subscriber called through the stage of line selection (26).

To this end, the recorder sends the marker of lines the corresponding marking code; as a consequence of this operation, the marker informs the recorder about the state of the line reached.
- Sending (27): this stage is applicable to calls in transit and outgoing calls, and on it the recorder performs the network signaling with the distant station.
- Final signaling (28): once the line selection or the sending have ended, the final signaling (28) is performed, and on this, the recorder programs, at the link or the feeder, the feeding conditions to be maintained towards the link or the subscriber.
- Releasing (29): in this stage, the recorder is released,and the circuit is set up.

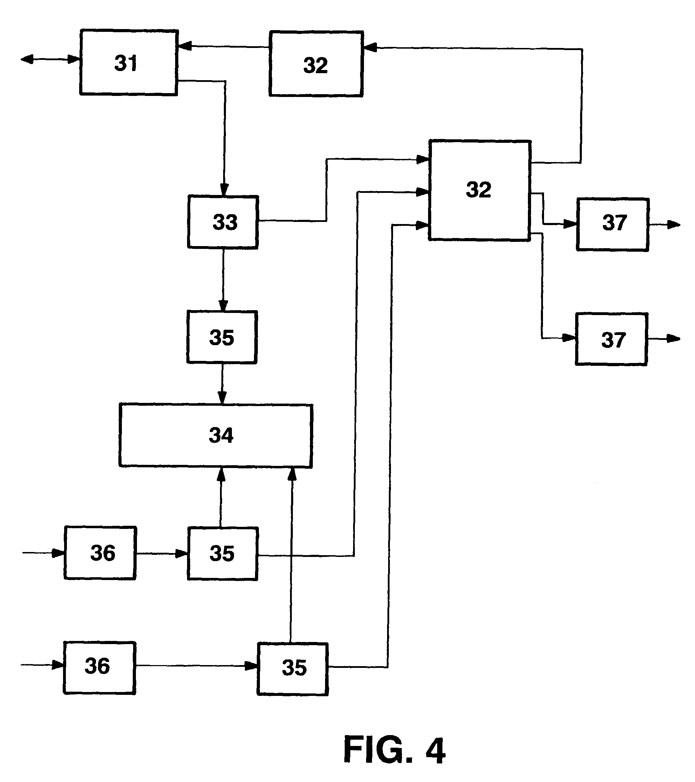

Figure 4 shows an esquematic view of the ARF system architecture, the operation of which is similar to the PC-1000 operation (shown in Fig. 1), provided that the procedures of establishment of circuits in the selection stages are followed step by step.

The ARF system includes, practically, the same functions, namely:
- Line selection stage (31).
- Group selection stage (32).
- Recorder link (33), this element being that performs also the line and link feeding functions (carried out by the output link or the feeders in the PC-1000 system).
- Control unit (34).
- Recorder searcher (35).
- Arrival link (36).
- Output link (37).

Nevertheless, there are differences between the ARF system and the PC-1000 system, such as:
- The ARF system is not fitted with a translator, and the closing of the circuits in the selection stages is directly performed by means of the ciphers of the calling subscriber. This information is tranferred from the recorder (34) to the selection elements (31, 32), by means of a R2 signaling, through the interface of the recorder searcher (35).
- Non existence of the connecting beam tracks: as a consequence of the procedures for closing the circuits, previously defined, the ARF system does not require common tracks between the markers (33) and the recorder (34).

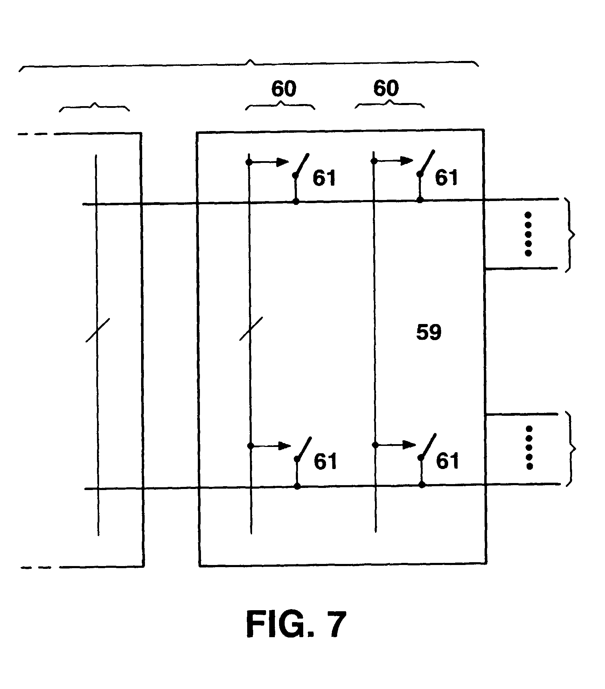

On the present electromechanical systems, there are communication tracks between the control unit and the rest of the elecmechanical system, with a bus structure, which are called "connecting beam tracks". As shown in Fig. 7, the connection to - these tracks is carried out by means of electromechanical multiplexers which are called "connecting frames" (59),each of which supports two beam tracks (60).

The connection of a marker or a recorder, active and inactive elements of the station, to a track, is performed by means of multiple relays (61), which connect the signals of the level of connection of the element to the inner track of the connecting frame, having a control terminal for each multiple relay to which each element is connected.

The coordination of the relay energizing allows the active and inactive elements to be connected.

Up till now, the adaptation of stations to the network requirements has been performed with a precise philosophy, that is to say, each problem was treated as a particular case to which a specific solution was given, which depended on the station characteristics (type and volume of traffic, localization, type of station), and on the requirements to be covered with the adaptation.

This type of condut brings about, in service, an incomptibility among the solutions adopted, so that, in front of a new development, it is necessary to raise again the situation, these solutions being, therefore, partial and temporary. In addition, these solutions compel to the introduction of a same type of recourse in each particular case, instead of envisaging once those necessary for a global improvement.

All this leads to a high cost in this type of accurate solutions.

In order to adapt the electromechanical systems to the functional requirements and new wants of the network, it is necessary to adopt a global solution, in a modular configuration, so that the modernized system performs improvements in the network services, as well as an automated management process and a provision of new functions and services to the subscribers.

All this must be carried out by means of a system which, even bearing in mind the type of station to be modernized, adapts itself in a flexible way to the typical characteristics of these network elements, and, therefore, allowing to perform functions on the part of the station in an analogous way to the manner in which it would perform in a digital station.

This could be attained thanks to an innovation constituted by functional modules which would include a control microprocessor, these modules constituting, on the one hand, the management elements of the control system, and, on the other hand, the mediatory elements between the control system and the own electromechanical stations.

It would be desirable that each of these modules would be managed by a microprocessor performing general purpose programs according to the requirements of the software architecture.

The modules configuring the system share an interconnection network which provides communication recourses among modules, which, together with the functional character of the software system, compels it to act like an assembly of programs supported by a virtual processor.

Nevertheless, till now, nothing is known about the existence of an invention contemplating, in its context, characteristics considered as suitable.

### SUMMARY OF THE INVENTION

The digital control unit for electromechanical stations as proposed by the invention constitutes, per se, an evident novelty destined to provide a modernization and adaptation to new facilities for the user in electromechanical stations, said digital control unit being composed of hardware modules, each of which has a specific functional character.

In a most definite way, the digital control unit for electromechanical stations of the invention is constituted starting from an appropiate equipment sizing, which is performed in a modular manner, in accordance with the peculiar characteristics of the modernized station, so installing so many boards of every type as necessary in order to provide the mediatory elements with the electromechanical station, and to perform the functions of control, signaling and operation of communications in a station like this.

Each hardware module is fitted with a process unit provided with microprocessor technology, controlling the signals it must transmit or record, and it is capable of performing programs of general purpose, according to the requirements of the software architecture.

The hardware modules of the invention are equipped forming groups communicating one other through a connection network, sharing clock and communication resourses.

The communication between system modules is carried out by means of PCM (Pulse Code Modulation) channels and statistical cannels, - there being two communication links between each group and the connection network.

These links are bidirectional and, while the statistical ones allow the messages to be transferred between software modes and packetswith signaling interfaces in packet mode, those of PCM type support the establishment of circuits between the mediatory elements with the system exterior and the own recourses of the system; all this for the signaling treatment.

The network links are galvanically disconnected, the signals being transmitted in a differential mode.

This sort of structure allows the groups to be distributed through the plant, and ensures a high noise immunity, avoiding the existence of return currents through the network links.

The transmitting part of a link telefeeds the receiver door the output of which is galvanically disconnected.

As a consequence of the above, the modernizing equipment is a system distributed both from the control point of view, and from the equipment one.

The functional hardware modules equipped in one group are of two types, namely:
- Module of system functions (FNS): these modules support the group structure, and perform clock synchronizing and generating functions, and the storage of data in massive storage devices (hard disks).
- Peripheral control module (MCP): these modules perform hardware functions, corresponding to the mediatory elements of the system with the exterior.

There are two basic types of peripheral control modules, namely:
- Recorder signaling (SRE): this is a hardware module which includes the circuits performing signal exchange between the electronic recorder and the subsystems of searcher of recorder, default recorder, subscriber identity, and supervision of links and feeders.

This module also carries out the treatment of the multifrequency signalings in their different modalities, acting as a platform for the logic system of phrases.
- Connecting beam connections (CHC): this module contains circuits performing the multiplexing and sending of signals to the connector beam tracks,

In addition to these functional modules, there are two types of boards auxiliary to them, which are:
- Interconnection network module: these modules equip the connection network, which is a multistage dynamic network allowing a communication between the system elements by means of PCM links and statistical links.
- Wiring board (PIC): the purpose of these boards is to adapt the connections and signals of the hardware modules to the elements where they must act within the electromechanical system, allowing, furthermore, the feeding and inner wiring of the system to be distributed.

The functional modules of the system are organized forming groups, so that each group is fitted with a system function module (FNS), the whole equipment being complemented with peripheral control modules (MCP), until the maximum capacity thereof.

The configuration of the peripheral control modules in the - group is determined by the requirements of their application, since the modernizing system allows any peripheral control module to be equipped in any position of the frame.

All the modules installed in a group are fitted with a communication channel with RS232 interface.

This communication channel with RS232 interface performs the connection of the operation terminal and the connection to the operating structure and maintenance (EOC) of the telephone network.

All the modules are fitted with a distributed feed.

On the local network, two lines are distributed: one for feeding the control functions, i.e., the inner function of the module, and one for power functions, i.e, those related to the mediatory element working with the electromechanical system and network functions.

The structure of feeding is distributed and disconnected, which, together with the disconnection provided by the network links, ensures the system with a high immunity in front of disturbances caused by the electromechanical generator noise on the electromechanical equipment.

The digital control unit for electromechanical stations uses, for controlling the signal synchronism in the local network, a time base formed by three signals.

These signals are generated by a module FNS, i.e. a function module of the system, which has a PLL (Phase Lock Loop), coupled with one of the input clocks, and it injects the generator clock into the local network.

Given the structure, grouped in pairs, of the system function modules, each pair generates the clock references to the next pair, there being also a duplicity of the clock signals.

The architecture of the hardware modules, i. e. of the peripheral control modules of the system, is unified as regards the control blocks, which are constituted by the following functional blocks, namely:
- Software process unit (UPSW): this block supports the software performance, and it is constituted by a CPU, memory, memory operating unit, and peripheral operating unit of the system.
- Access-to-peripherals unit (UAP): this blocks controls the signal exchange with the electromechanical system to which it is connected, and it is specific of each module, according to the task to be performed, - being fitted with processors or coprocessors, inaccordance with the recourses required by the corresponding mediatory element.
- Access-to-local-network element (IARL): this blocks is a coprocessor of communications which allows the HDLC links to be exchanged into other modules.

The access-to-local-network element includes resourses for establishing PCM channels between the access unit to peripherals and the local network.
- Communications memory (MC): this blocks allows the information to be transferred among the three previous ones, for which queue structures are used, which allow the previous blocks to be operated according to a control strategy via data flow. The functional blocks intercommunicated by means of this procedure are weakly coupled, since the block transmitting the information stores this information in the queues of the receiver independently of the state of this block, the task of the receiver being to collect and process the information according as this information arrives at the queue.

Between modules of the system, located in different groups, the communication is established by means of the connection network, which provides the communication resourses, and this allows the system to increase with the only addition of the number of groups necessary to the installation.

All this, together with the software functional character of the system, causes the system to behave like an assembly of programs supported by a virtual processor.

The connection network is a multistage dynamic network connecting the PCM and statistical circuits.

The connection network is configured in a modular way starting from an only type of module, so-called "module of connection network (MRI)", which is arranged, from the switching point of view, in three functional blocks:
- Circuit switching matrix (MCC): it allows input and output channels to be connected according to a space-temporary structure (S-T), establishing a particular circuit instantaneously when the request is made.
- Link switching matrix HDLC (MCT): it achieves the reception and transmission of the HDLC links.
- Control unit: it is the addressee or generator of the HDLC (High Level Data Link Control) links.

As already described, the UAP manages the circuits placed between the system and the electromechanical elements.

Said circuits accede to the electromechanical elements of the station, also called "points of actuation", which, according to the nature of the electric signals, are divided into three types of points, namely:
- Points of analogical nature, corresponding to balanced telephone circuits.
- Points of logic nature, corresponding to control signals of the electromechanical elements.
- Points of mixed nature, presenting the characteristics of the two previous types in different time moments.

In general, the points are of actuation and scanning nature, although there are points having only a scanning nature.

In case of actuation, this circumstance must respond in a dynamic way in the course of the operations to be carried out, which is attained by including circuits having a technology of switched sources capable of being configured as voltage and current sources with capacity for injecting or draining current (converter of four quadrants).

The circuits configuring the mediatory elements are protected against electrical shocks, caused by the relay coils of the electromechanical elements, and also against possibly caused by metereological phenomena or of other type, in the network.

The protections incorporated materialize in gas dischargers and semiconductor devices, as well as protections againstshortcircuits in the network of low voltage power distribution.

As already mentioned, the system has an assembly of circuits, a large part of them being of hybrid nature, which form a part of functional modules constituting the mediatory elements with the electromechanical equipment of the station. These circuits are as follows:
- HPAE circuit (hybrid for actuation and scanning point): each circuit of this type controls the operation on two actuation and scanning points, and it is consisted of a switched converter, with digital loop of control and digital modulator of pulse width, capable of programming in its operational modes, which include the - transfer of bidirectional power, unidirectional ingoing, and unidirectional outgoing.

All this is united to different protections against electric shocks, overload, excess temperature, and so on.

Furthermore, it includes a facility of digital programming and digital read of the voltage and current levels at the output, for the actuation and scanning points it manages and found in the station.
- HCLA circuit (hybrid for subscriber line): it is composed of two blocks: the circuit of subscriber loop interface (SLIC) and a encoder block, constituted by a COMBO, filters and A-D and D-A converters performing the hybrid and digital interface functions.

The circuit generates the loop feeding in continuous, and processes the telephone channel, performing an analog/digital conversion.

This hybrid circuit for subscriber line carries out the intercession between the couple of subscriber and the recorder searcher, in the local chain.
- HCLE circuit (hybrid for link line): it consists of an adaptation transformer and a COMBO, which performs the same functions as in the case of the hybrid circuit for subscriber line.

This hybrid circuit for link line processes the telephone channel, performing exclusively ananalog to digital conversion, and it is located in an output loop of the recorder searcher interface.
- HCLU circuit (hybrid for universal line): it carries out the treatment of the telephone channel, and it allows, in a programmed mode, the loop to be fed in continuous, or unhook the loop.

It supports the interface of the arrival loop of the recorder of the arrival chain, in which CC/MF current (direct current/multifrequency) or EM/MF current (E and M/multifrequency) links, indistinctly, are to be treated.

Also, this hybrid circuit for universal line performs the unhook of the link loop in those system where the electromechanical elements do not do it.
- HPEX circuit (hybrid of scanning points): it is a circuit which allows the voltage levels to be measured in different points of the station.

Since the circuits which include the mediatory elements with the elements of the electromechanical station, present, for their connection, different wiring characteristics, there is available a mechanical and wired design which is constituted by boards of wiring interface (PIC), the fundamental function of which is to adapt the - signals of the hardware modules to the corresponding actuation - points, so fulfilling, in addition, the requirements regarding the feeding distribution and the inner wiring of the digital control - unit for electromechanical stations.

Each functional hardware module has one or several types of wired interface boards associated, which are connected to the functional module by means of the panel of frames, which are installed and performs the following functions:
- Frame normalizing, so that only a sole type of functional frame is required.
- Wiring of the RS232 communications interface.
- Allocation of the signals from the funcional modules to the wiring thereof.
- Line and link protections.
- Treatment of the mixed nature points (logic and analog). The mixed nature points are configured in an analog or logic manner by means of a switch located at a wiring interface board, which is controlled by the UPSW, and this switch connects the couple terminals to a HPAE circuit or a line or link circuit.
- HPAE connection in parallel, generating, when the electromechanical terminals require it, excitation currents higher than the provided by an only circuit.
- They contain the HPEXs for scanning the station elements.
- Signal filtration in the electromechanical interface, so that the break currents generated in the relay coils do not reach the hardware modules.
- Battery feeding filtration.

According to the funcional character, there are two types of hardware modules, so-called "SRE" (recorder signaling), and "CHC" (connecting beam connection).

Within these signaling modules of recorder and connecting beam connection, the hybrid circuits (HPAE, HCLA, HCLE, HCLU and HPEX) allow the electric actuation of the modules to be configured in accordance with the adequate requirements of the points in which they act.

The SRE module structure responds to the architecture of the system modules, in which the UPSW and IARL blocks are identical for all types of modules. The UAP is configured by the hybrids so that it includes:
- HPA circuits, controlling up to 68 points. This block is - controlled by the UPSW processor, which can program and read the electrical conditions of the point on which it acts.
- The block of circuits of lines and links furnishes the mediatory elements with analog loops by using the corresponding hybrids (HCLA, HCLE and HCLU).

These circuits are controlled from the UPSW processor, which programs the characteristics of the hybrid, both in frequency and gain.

The block of circuits of lines and links can also read the opening or closing state of the loop, which is necessary for treating the call by the electronic recorder, and also for enabling the circuits in service of out of service.

These circuits are connected to the inner PCM links of the module, so that the digital samples of the telephone channel can be switched to the connection network via the IARL, or to the signal digital processor.

This processor is responsible for generating and detecting sigling tones, both simple and multifrequency, in the connections with the subscriber lines and with the links.

The digital processor is controlled from the UPSW processor, which provides the necessary hardware infrastructure for treating the link and subscriber signalings.

The signal digital processor is used, also, for generating phrases. All the modules SRE of the system give part of the RAM memory of the UPSW for storing phrases, which are transferred to the digital processor which takes on the task of including them in the inner PCM channels, from which they are injected into the corresponding analog connection.

The PCM samples can be transferred through the connection network, and from other SRE module, and for this reason they can be generated on the corresponding connections both locally and remotely.

The functional nature of the SRE module is completed with the corresponding PIC boards, which include, in necessary cases, the HPEX performing the voltage reading in the points of the station.

The CHC module includes a connection with three tracks of the connecting beam, which are composed of 23 electromechanical signals of logic type.

For this reason, the UAP of this module is composed of 69 actuation and scanning points which are controlled by the corresponding HPAEs.

The architecture of this module is similar to that of SRE, although is a lot more simple due to the fact that it does not need any elements for analog connections.

It has a PIC board associated performing the filtration of logic signals and the filtration of battery feed, and it contains the RS232 interface.

The system completes its structure with boards performing auxiliary functions, such as:
- General alarms.
- Introduction of alarms in the frame.
- Introduction of alarms in the control center.

Several of these alarms are generated in a selfcontained way, without any intervention of the software, given its hierarchical level, as it is the case in the feed failure.

Nevertheless, other alarms are generated starting from specific alarms of the system, indicating not only the type of problems, but their urgency, and being able of being transmitted to the control center.

All those alarms are introduced by means of lamps located on - the corresponding frame, and, in turn, they are generated towards the exterior by means of relay contacts, in order to ensure their enabling, even before failures in the feed.

The alarm panel is supported by a board so-called "module of alarms and supervision of protections " (MASP).

Said module of alarms and upervision of protection board is generally fitted on the feeding and supervision frame, although it can also be fitted in the functional frames.

The feeding and supervision (CAYS) frame allows the feed to be distributed to the functional frames, and it contains the alarm panel and the miscellaneous functions.

The feed distribution to the functional frames is carried out from the system battery, through a main disjunctor, fuses, and individual dividers for each frame.

The feed distribution to the frames is performed in an independent way for the control and power circuits.

The alarm and miscellaneous function panel provides connecting bases for the following functions:
- Fuse state supervision.
- Programmable alarms (overload, out of service state, etc, etc).
- Remote alarms (allowing the system to be connected to the supervision panel of the station).

The digital control unit for electromechanical stations works under environmental conditions, without using vent equipment, the equipment being cooled by natural convection, since it includes, in addition to the design of the functional modules with a lower thermal resistance (lower than 0,1 degree/watt), a high output in the power circuits.

The last is added by a laminar ventilation which is attained by means of a special arrangement of the power circuits on the boards, and thru the existence of air deflecting panels located at the bottom of the frame, which direct the heat produced by the frame to the exterior, without affecting the frame located at the back side.

All the electronic elements of the digital control unit for electromechanical stations are designed so that they can coexist, in a same installation, with the electromechanical elements which are replaced by them.

In this manner, the installation program is carried out in a gradual way.

This feature is based on the properties of the functional modules of the digital control unit for electromechanical stations.

These functional modules are:
- Electronic recorder, which includes: a recorder searcher and the connecting beam tracks.
- Default recorder.
- Subscriber identity.
- Supervision of links and feeders.

These signaling and control resources allow the subscriber and link to be treated, as well as an interaction with the electromechanical system, for establishing a call.

These functions replace the electromechanical control unit of stations to be modernized.

In this way, the electronic recorder carries out the treatment of the subscriber and link signaling and the establishment control of the call, replacing the electromechanical control unit, and coordinating the activities of the rest of the subsystems, and it has two interaction types with the electromechanical equipment, namely:

Recorder searcher: allowing the subscriber and link signaling to be acceded,there being a metallic access to the physical couples of these telephone circuits.

In addition, it allows the electromechanical system to be controlled, as, by means of a wire assembly, an inner signaling is performed with the electromechanical system, by using potentials or a multifrequency signaling R2.

The establishment of physical circuits through the electromechanical connection network requires an exchange of marking and category codes or states between the electronic recorder and the station markers, this transfer controlling the recorder searcher.

The digital control unit for electromechanical stations equip so many connections for recorder searcher as electromechanical recorders are installed in the station to be modernized.
- Connecting beam tracks: performing a transfer of the marking and category codes for establishing physical circuits.

On the present electromechanical systems, there are communication tracks between the control unit and the rest of the electromechanical system, avec a bus structure, so-called "connecting beam tracks".

The connection to these tracks is made by means of electromechamical multiplexeers so-called "connecting frames", each of which supports two beam tracks or buses.

The marker or recorder connection, which are the active and inactive elements of the station, to a bus is performed by means of multiple relays connecting the level signals of connection of the element to the inner track of the connecting frame, having a control terminal for each multiple relay to which this element is connected.

The coordination of the relay energizing allows a connection between active and inactive elements.

In the case of the electronic recorder, which modifies the control elements of the electromechanical system, since all the recorders belong to a same digital control system, the access concurrence is solved at a logic level.

The above mentioned makes it unnecessary to use connectors, and neither it is necessary a multiplexing in the connecting beam track performed by the multiple relays.

The electronic recorder is fitted with connection functions to the connecting beams by elements so-called "track interface" (ICHC),

Each of these connections include the data transfer terminals and the actuation control terminals of the two multiple relays of the couple of beams.

The multiple relays are used for configuring the access to the tracks, and, therefore, they are activated permanently. So, two ICHC are associated to two tracks, and an additional ICHC is fitted per beam as stanby.

The access to a track from any recorder is performed thru the ICHC interface corresponding to it.

The access commands to the information transferred via the track is accessible from any recorder by means of a message among processes, and this allows to considerably reduce the number of necessary connections, and, also, multiple levels of access to the recorders are provided, by improving thereby the availability of same, and, furthermore, the increase of the number of activations of the relays improves the functional performance of the system and reduces the failure rate of same.

The subscriber identity system provides a physical identity referred to the number of the calling subscriber equipment.

The digital control unit for electromechanical stations performs functions of coding-and subscriber identity reading starting from - the electromechanical information of the subscriber level, within the frame of terminal selectors of the corresponding thousand and of the identity of the terminal selector frame (also denominated "frame of fifty").

To this end, on each line markers, the levels of subscriber and frame of terminal selectors are multiplexed, so that, when a line marker is taken, the mutual exclusion circuit makes possible that, on the multiplexed wires, the level and the frame corresponding to the subscriber, at that time being serviced by the marker, will be only those activated.

This information is red and codified by each thousand element.

In case that the electromechanical system would already perform this type of functions, the subscriber identity subsystem limits itself to read the physical identity of the subscriber, and to process it in accordance with the call functional character.

The subscriber identity subsystem is organized so that each thousand element has an encoder associated with the information provided by the electromechanical equipment, related to the subscriber identity.

This information is processed by the encoders, which transfer it to the subscriber identification subsystem by means of a communication network which is specific of this subsystem.

Both the communication network and the physical elements of connection are duplicate in order to verify the necessary reliability and availability.

The subscriber identity subsystem receives the messages sent by an encoder, so generating an information which corresponds to the subscriber management, measures and statistics of line markers.

Also, the subscriber identity subsystem performs operation and maintenance functions for the subscriber's identification.

The default recorder subsystem includes maintenance functions related to the elements identification, in particular:
- Identification of elements involved in a call non completed due to defaults in the system.
- Identification of ill-intentioned call.

On the electromechanical stations, the mechanism detecting defaults is triggered by the active elements of the station, so that when an active element detects a fault, it cause a call to the default recorder, and it indicates the rest of inactive elements, involved in the call, to connect, they must connect with Said recorder.

As a consequence of the default recorder enabling, this recorder resolved the call concurrence, i.e. it pays only attention to one of them, the rest resting free, it rectifies the elements involved in the call, and it sends the information to the operation terminal.

In the case of the electronic recorder, the connection to the default recorder is made through an inner connection network, and in this case, the information on the default, both thru connection and as active or inactive element, is transferred by a message containing a detailed information about the default.

This structure allows to eliminate the electromechanical connection with the existing default locator in the electromechanical recorder, generating, furthermore, a more detailed information.

The treatment of the ill-intentioned call is performed thru the modules of the identity searcher and ill-intentioned call adaptor, and when a subscriber with category of ill-intentioned call identification provokes this process, the default recorder receives the identity of the calling subscriber provided by the identity searcher.

The ill-intentioned call adaptor provides the default recorder with the called subscriber identity, and the data corresponding to the callling and called subscriber are processed by the default recorder, and transferred to the operation terminal.

The calling subscriber identity is sent forward by the electronic recorder, by request of the destination station.

The physical connection between the electromechanical equipment and the default recorder is performed thru an intermediate default distributor which performs, by means of the multiplexing on the panel, the concentration of terminals in the interface of the default recorder.

The subsystem of link and feeder supervision manages the scanning on the output links and feeders, and it becomes it necessary for carrying out a detailed tariff and traffic measures.

For this reason, the subsystem of supervision performs the following functions:
- Intake: determination of the'period in which the link is taken.
- Occupation: it determines the beginning and the end of a call.
- Identification: it associates the traffic parameters measured at the link circuit with the subscriber originating the call.
- Calculation: it carries out the calculation pulses generation in accordance with the tariff rate.

The digital control unit for electromechanical station is fitted with a connection for each output link or feeder, which determines the intake and accupation in phase of link conversation.

These connections are groupped in blocks, which are serviced by a same hardware board, i.e. a SRE module supporting 64 links.

The equipment of this function is performed by dimensioning the number of boards according to the number of output links and feeder to be supervised.

The treatment of the call is performed in a coordinate way by the electronic recorder and the supervision subsystem of links and feeders, so that, in phase of establishment, the responsible for the call control is the electronic recorder, this control passing to the supervision subsystem of links and feeders in the conversation phase.

The massive storage subsystem is shaped by a processor and hard disk of commercial technology, equipped in FNS modules, which are installed in pairs, ensuring the reability and capacity which are necessary for storing and reading the following types of files:
- Programs and data on the system configuration.
- Files of detailed tariffs.
- Files of traffic measures.
- Operation files.

All these files are stored in duplicate, the duplicate consistency being checked in a systematic way, and, with dependence on the application which they refer to, a reading and writing thereof is performed.

In the case of a detailed tariff, the files are written according to the information generation thru the calls, and they are read from te operation terminal for being transferred to the SRDF (billing data collecting system).

The traffic measure files have a similar process, although in this case they are transferred to SGT (traffic management system).

The operation files can be modified both by the own system, and by the operator.

In the first case, that is to say, when the operation files are - modified by the own system, the operation data are altered as a consequence of automatic reconfigurations of the system, and the operator can consult the operation data, either from the terminal of local operation, or from a terminal of the EOC (operation and maintenance structure).

The subsystem of the operation terminal is composed of one or several intellingent terminals, type PC or work station, and a packet of programs supporting the operation application.

The physical connection of the operation terminal to the switching equipment of electromechanical station modernization is performed by means of two or more RS232 interfaces, from which all the boards are fitted with, so having also a direct connection with the operation and maintenance structure which allows it to accede to the operation of the system, independently of the state of the local operation terminal.

### BRIEF DESCRIPTION OF THE DRAWINGS

In order to complement this description and aid to a better understanding of the features of the invention, the accompanying drawings, which are a part of this specification, show in an illustrative manner the following:-

Figure 1 shows a schematic illustration of the architecture of an electromechanical system, exactly a PC-1000 station, where the elements composing the call establishement are detailed.

Figure 2 shows a detail of the electromechanical system control unit, exactly a PC-1000 station according to the schematic view of Fig. 1.

Figure 3 shows a diagram of the call stage of an electromechanical system, according to the schematic view of Fig. 1.

Figure 4 shows the architecture of an ARF system, illustrating the differences it exhibits as regard the PC-100 system shown in Fig. 1, 2 and 3.

Figure 5 shows the architecture of a crossed bar system, which - includes the digital control unit which replaces the control unit shown in Figs. 1, 2 and 3, so fitting the system with new facilities, which are the subject of this invention.

Figure 6 shows the functional architecture of the digital control unit for electromechanical stations, with a detail of the functional modules composing it.

Figure 7 is a detail of the connection of the connecting beam - tracks of the PC-1000 system.

Figure 8 shows the connection of the electronic recorder to the connecting beam tracks, once the system has been transformed including the digital control unit of the invention.

Figure 9 details the structure of the subscriber identity subsystem.

Figure 10 shows the default recorder subsistem and its connections.

Figure 11 corresponds to the general hardware architecture of the digital control unit, showing the connections with the interior and the own interconnection network.

Figure 12 shows the structure of a group configuring the digital control unit.

Figure 13 details the structure of the interconnection network.

Figure 14 shows a schematic view of a functional module, with a detail of the elements composing it.

Figure 15 describes the feeding distribution to the functional modules.

Figure 16 shows, lastly, a block diagram corresponding to the electronic recorder module (SRE).

### DETAILED DESCRIPTION OF THE PREFERRED EMBODIMENT

From these Figures, it can be seen how the digital control unit for electromechanical stations is designed for modernizing and adequating new subscriber facilities to electromechanical stations of the type shown in Figs. 1, 2, 3, 4 and 7, these stations being devoted to establish telephone circuits by means of cross bar switching matrices, this invention replacing the control structure of these electromechanical stations, providing the facilities required by law.

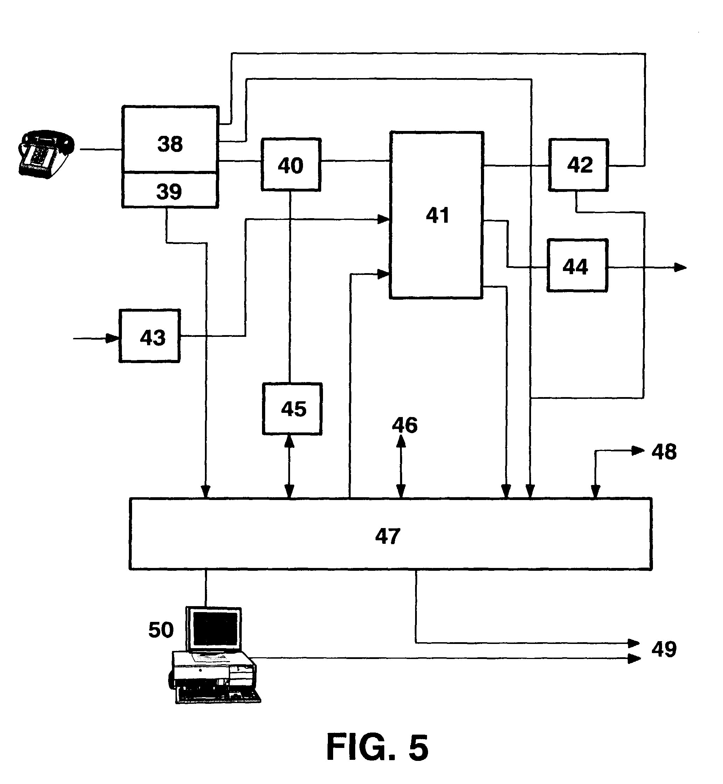

Figure 5 shows the architecture of a crossbar system, including the digital control unit of the invention.

Following said Fig. 5, and comparing it with Fig. 1, it can be seen the effect of the replacement performed in the signaling and control resources, but maintaining as yet the stage of line selection (38), markers (39), recorder link (40), group selection stage (41), feeders (42), arrival (43) and output (44) link intakes, as well as a recorder searcher (45) and the connecting beam tracks - (46).

The actuation in all these elements is governed upon incorporating the object of the invention, thru the digital control unit - (47), which shows an outlet digital link (48) and a connection with the operation and maintenance structure (EOC), and other one for the operation terminal (50) which, in turn, can be connected to the operation and manintenance structure (EOC), or to other network management systems, such as it can be the billing data - recording system (SRDF) or the traffic management system (SGT).

The digital control unit for electromechanical stations (47) displays mediatory elements with the electromechanical elements, on which it acts, allowing the call be estalished, and increasing the functional character of the electromechanical station.

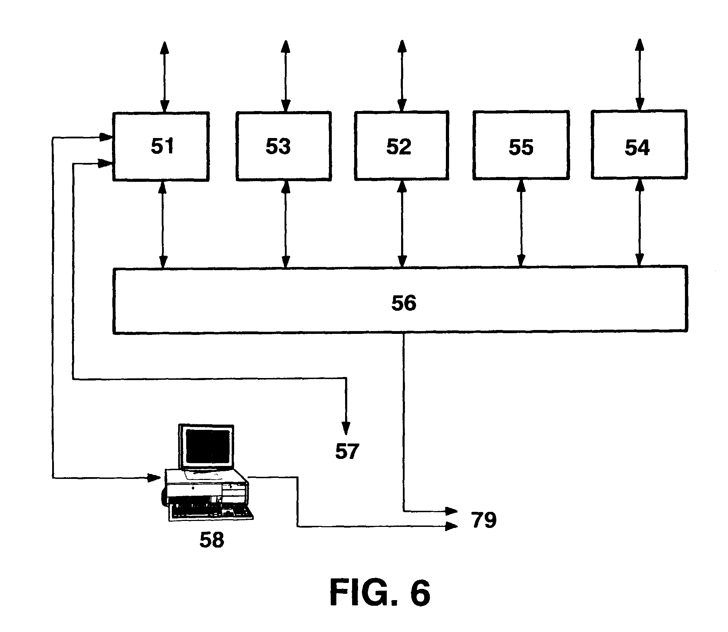

To this end, the digital control unit is organized in functional modules, as shown in Fig. 6. These functional modules are as follows, namely:
- Electronic recorder (51), interacting with the recorder searcher and the connecting beam tracks.
- Default recorder (52).
- Subscriber identity (53).
- Link and feeder supervision (54).
- Massive storage unit (55).
- Interconnection network (56) amongst different modules.

There is also a direct connection with the operation and maintenance structure (EOC) (57), and other connection for the operation terminal (58).

The signaling and control resources allow the subscriber and link signaling to be treated, as well the interaction with the electromechanical system, for establishing a call, and these functions replace the electromechanical control unit of the stations to be modernized.

So, the electronic recorder (51) performs a treatment of the subscriber and link signaling and the call establishement control, replacing the electromechanical control unit, coordinating the activities of the rest of subsystems, and it has two interaction types with the electromechanical equipment.

The two interaction types with the electromechanical equipment are as follows:
- Recorder searcher: it allows to accede to the subscriber and - link signaling, there being a metallic access to physical couples of these telephone circuits, and, furthermore, it allows the electromechanical system to be controlled, since, by means of a wire - assembly, the inner signaling with the electromechanical system is made, by using potentials or multifrequence signaling R2.

The establishment of the physicak circuits through the electromechanical connection network requires an exchange of the marking and category or state codes between the electronic recorder and the station markers, this transfer being performed via the recorder - searcher.

The digital control unit for electromechanical stations equip so many connections for recorder searchers as electromechanical recorders installed in the station to be modernized.
- Connecting beam tracks: they perform a transfer between the control unit and the markers of marking and category or state codes, for establishing physical circuits.

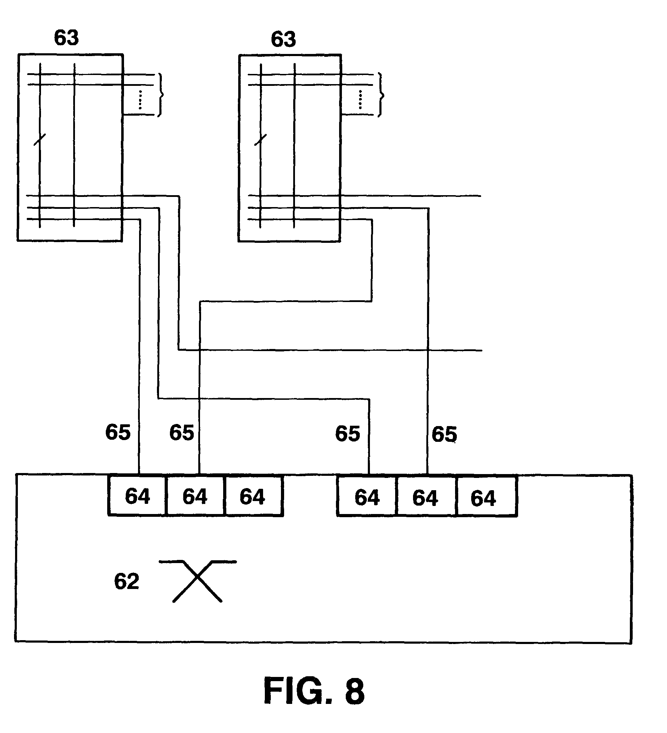

Figure 8 shows the connection of the electronic recorder to the - connecting beam tracks, in this case the electronic recorder (62), which modifies the control elements of the electromechanical system, and since all the recorders belong to a same digital control system, the access concurrency is solved at a logic level.

This makes it unnecessary to use connectors, and the multiplexing in the connecting beam tracks performing the multiple relays is, neither, required.

The electronic recorder (62) is fitted with functions of connections to the connecting beams (63) by means of elements so-called "track interface" (ICHC) (64).

Each of these connections includes the data transfer terminals and the actuation control terminals of the two multiple relays of the beam couple.

The multiple relays are used for configuring the tracks, and,- therefore, are excited in a permanent way.

In this manner, two track interfaces (64) are associated to two tracks (65), and one additional track interface (64) is equipped per beam in stanby.

The access to a track from any recorder is performed through the track interface (64) corresponding to this latter.

The access commands and the information tranferred via a track is accessible from any recorder by means of a message amongst processes and this allows the number of necessary connections to be considerably reduced, and in turn it provides multiple access levels to the recorders, so improving the availability thereof.

Furthermore, the reductions in the number of the relay excitations improve the functional performance of the system, and reduces the failure rate of same.

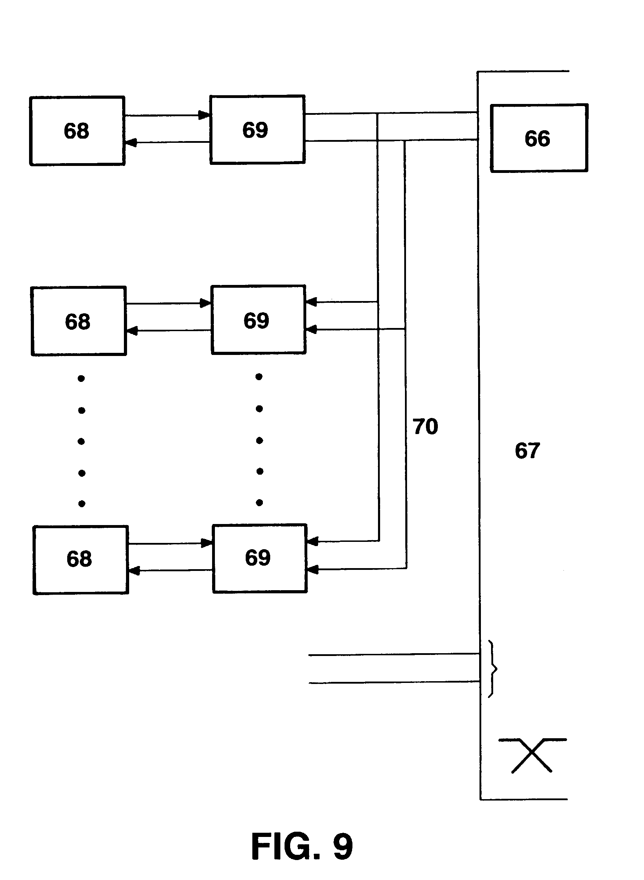

Figure 9 shows both the connection and the functions of the subscriber identity subsystem (66), which provides the physical identity, referred to the number of equipment of the calling - subscriber.

The digital control unit for electromechanical stations performs coding and subscriber identity reading functions starting from the subscriber level electromecanical information, within the frame of terminal selectors (68) of the corresponding thousand and of the identity of the terminal selector frame (also so-called "fifty frame").

To this end, on each line markers, both the subscriber levels and the terminal selector frame are multiplexed (68), so that when a line marker is taken, the mutual exclusion circuit causes that, on the multiplexed wires, there appearing only activated the level and the frame corresponding to the subscriber at that time being serviced by the marker, and this information is read and coded by each thousand element (68).

The subscriber identity subsystem (66) is so organized that each thousand element has an encoder associated (69) with the information provided by the electromechanical equipment, in relation to the subscriber identity.

This information is processed by encoders (69), which transfer it to the subscriber identification subsystem (66) by means of a commumications network (70), specific in this subsystem.

Both the communications network (70) and the physical elements of connection are duplicate in order to verify the necessary liability and availability.

The subscriber identity subsystem (66) receives the messages sent by the encoder (69), so generating the information corresponding to the management of subscribers, measures and characteristics of the line markers.

It also performs operation and maintenance functions for the - subscriber identification.

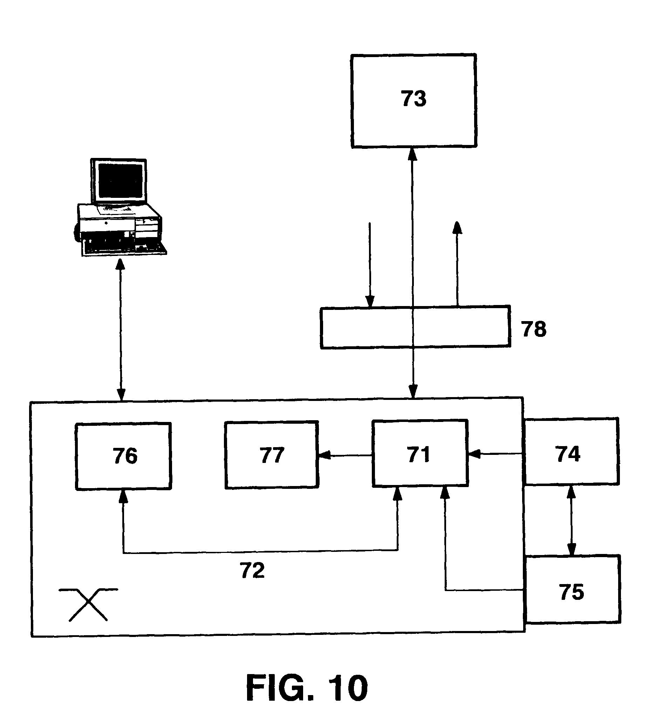

The default recording subsystem is shown in Fig. 10, and it includes the maintenance functions related to the identification of elements, specifically:
- Identification of elements involved in a non complete call due to defaults of the system.
- Identification of ill-intentioned call.

On the electromechanical stations, the mechanism detecting defaults is trigged by the active elements of the station, so that when an active element detects a default, it provokes a call to the default recorder, and advises the rest of inactive elements involved in the call, they must connect to said recorder.

As a consequence of the default recorder activation, this solves the call concurrence, that is to say, it only services one of them, the remaining being free, identifies the elements involved in the call, and sends the information to the operation terminal.

In the case of the electronic recorder, the connection to the default recorder (71) is made through the inner connection network, and, in this case, the default information, both of connection and as active or inactive element (73), is transferred by - means of a message containing a detailed information about the default.

This structure allows the electromechanical connection to be eliminated with the existing default detector in the electromechanical recorder, a more detailed information being generated.

The treatment of the ill-intentioned call is performed thru the modules of the identity searcher (74) and ill-intentioned call adapter (75).

When a subscriber with ill-intentioned call identification category provokes this process, the dafault recorder (71) receives the identity information of the calling subscriber which - provides it the identity searcher (74).

The ill-intentioned call adapter (75) provides the default recorder (71) with the identity of the called subscriber.

The data corresponding to the calling and called subscriber - identity are processed by the default recorder (71), and transferred to the operation terminal (76).

The calling subscriber identity is sent forward by the electronic recorder (77), at the request of the destination station.

The physical connection between the electromechanical equipment and the default recorder is performed thru the default intermediary distributor (78), which, through multiplexing on the panel, performs a concentration of terminals at the default recorder interface.

The remaining of the functional modules displaying analog structures are shown in Fig. 6.

Said figure shows also the link and feeder supervision subsystem (54) managing the scanning on the output links and feeders, and this becomes necessary for obtaining a detailed tariff and traffic measures.

To this end, the supervision subsystem performs the following functions:
- Intake: determination of the period in which the link is taken.
- Occupation: determination of the beginning and end of the call.
- Identification: association of the traffic parameters measured in the subscriber link circuit originating the call.
- Calculation: realization of the computation pulse generation according to the tariff rate.

The digital control unit for electromechanical stations of the invention is fitted with a connection for each output link or feeder, which determine the intake and occupation in phase of link conversation.

These connections are grouped in blocks, which are served by a same hardware board, which is a SRE supporting 64 links.

The equipment of this function is performed by dimensioning the number of boards according to the number of output links and feeders to be supervised.

The treatment of the call is performed in a coordinate way by the electronic recorder (51), and by the link and feeder supervision subsystem (54), so that, in phase of establishment, the responsible for the call is the electronic recorder (51), this control being passed on to the link and feeder supervision subsystem (54), in the stage of conversation.

The subsystem of massive storage (55) is composed of a processor and hard disk of commercial technology, which are installed in pairs,

so ensuring the necessary liability and capacity for storing and - reading the following types of files:
- Programs and data of the system configuration.
- Detailed tariff files.
- Traffic mesaure files.
- Operation files.

All these files are stored in duplicate, the consistence of duplication being checked in a systematic way and, with dependence on the application to which they refer, the reading and writing of same is performed.

In the case of a detailed tariff, the files are written according to the generation of information by calls, and they are read from the operation terminal (58) for being transferred to the SRDF (79), that is to say, to the billing data collecting system.

The traffic measure files display a similar process, although in this case they are transferred to the traffic management system (SGT) (79).

The operation files can be modified, both by the own system and by the operator.

In the first case, that is to say, when the operation files are modified by the own system, the operation data are altered as a consequence of the automatic reconfiguration of the system.

The operator can consult the operation data, either from the local operation terminal (58), or from a terminal of the operation and maintenance structure (EOC) (57).

The operation terminal subsystem (58) is composed of one or several intelligent terminals, workstation or PC type, and also by packet of programs which supports the application of the operation.

The physical connection of the operation terminal to the switching equipment for modernizing electromechanical stations is performed by means of two RS232 interfaces, of which all the boards are fitted with, so having also a direct connection with the EOC, that is to say, with the operation and maintenance structure (57), which allows it to accede to the operation of the system, independently of the state of the local operation terminal.

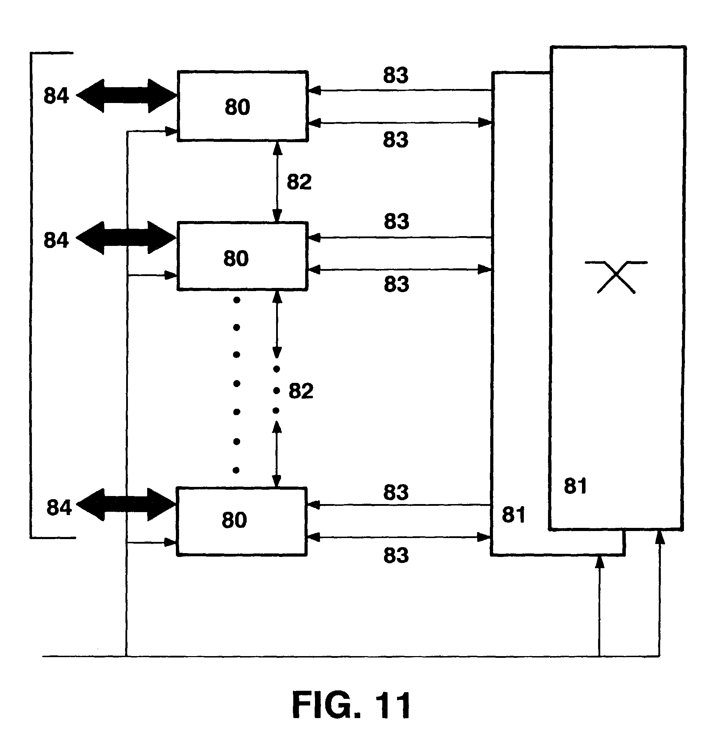

As regards the hardware architecture of the digital control unit for electromechanical systems, this architecture is shown in Fig. 11.

The hardware modules of the system are fitted forming groups (80) which communicate thru the interconnection network (81), sharing clock (82) and communication resources.

The communication amongst system modules is performed by means of channels PCM (Pulse Code Modulation), and statistical channels, there being two links (83) of communication between each group (80) and the interconnection network (81).

These links are bidirectional, and, while the estatistical type ones permit to transfer messages between software modes and packets with signaling interfaces in packet mode, those of type PCM, that is to say, pulse code modulation, support the establishment of circuits between the mediatory elements (84) with the exterior of the system and the own resources of the system. all this for treating the signaling.

The network links (83) are galvanically disconected, the signals being transmitted in a differential mode.

This structure allows the groups to be distributed in a plant, and it ensures a high noise immunity, avoiding the existence of return current through the network links (83).

The transmitting side of a link telefeeds at the receiver door, the output of which is disconnected galvanically.

As a consequence of this, the modernizing equipment is a system distributed both from the control point of view and from an equipment point of view.

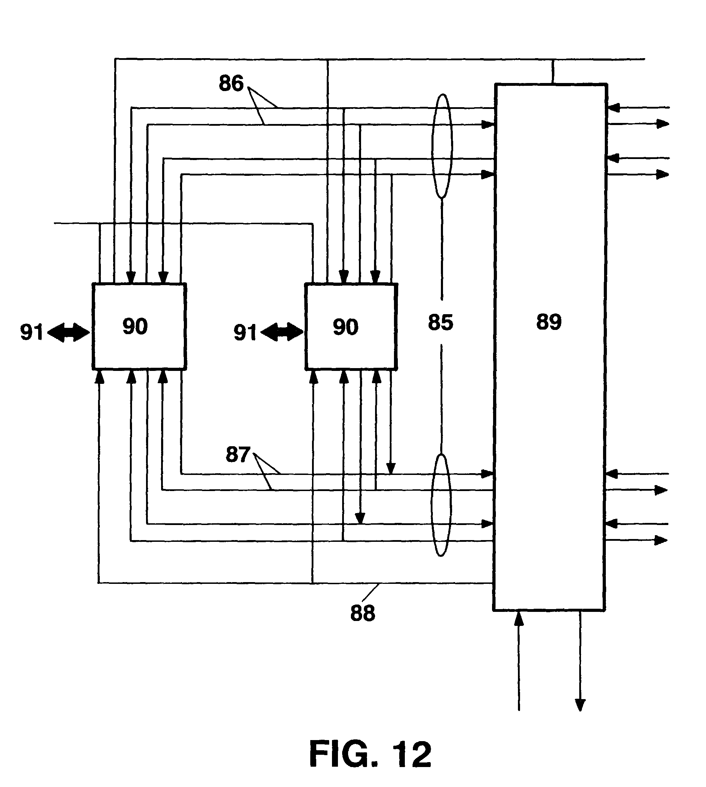

The inner structure of each group is shown in Fig. 12, and each group is composed of hardware modules which communicate by means of local network (85).

The local ntework (85) displays statistical links (86), type PCM links (87) and clock and synchronism signals (88).

The functional hardware modules equipped in a group are of two types, namely:
- Module of system functions (FNS) (89), these modules supporting the group structure, and they perform synchronization and generation of clocks functions, and storage of data in massive storing devices (hard disks).
- Module of peripheral control (MCP) (90), these modules performing hardware functions corresponding to the mediatory elements of the system with the exterior.

There are two basic types of peripheral control modules (MCP) (90), namely:
- Recorder signaling (SRE): it is a hardware module in which circuits performing exchange of signals between the electronic recorder and the subsystems of recorder searcher, default recorder, subscriber identity and supervision of links and feeders are included, performing also a treatment of the multi frequency signalings in their different modalities, serving as a platform to the logic locution subsystem.
- Connecting beam connections (CHC): this module contains the circuits performing a multiplexing and sending of signals to the connecting beam tracks.

As already said, the functionsl modules of the system are organized forming groups, so that each group is equipped with a module FNS (89), the equipment being completed with modules MCP (90), up to the maximum capacity of this.

The configuration of the modules MCP (90) in the group is determined by the requirements of application, since the modernizing system allows any module MCP (90) to be equipped in any position in the frame.

The equipment dimensioning is carried out in a modular way, in accordance with the characteristics of the modernized station, by installing as much boards of each type as necessary in order to manage the mediatory elements (91) with the electromechanical sta - tion and carry out the functions of control, signaling and operation of the communications in a station of this type.

Each hardware module is fitted with a process unit implemented with a microprocessor technology, which performe the control of the signals to be transmiited or recorded, and it can perform general purpose programs, according to the requirements of the software architecture.

All the modules installed in a group are fitted with a communications channel with RS232 interface.

This communications channel performs the connection of the operation terminal and the connection to the operation and maintenance structure (EOC) of the telephone network.

Amongst the modules of the system located in different groups, the communication by means of the interconnection network is established.

The interconnection network is a dynamic multistage network which allows to communicate amongst system elements by means of PCM links and statistical links.

The network is configured in a modular manner through a sole type of module so-called "interconnection network module" (MRI).

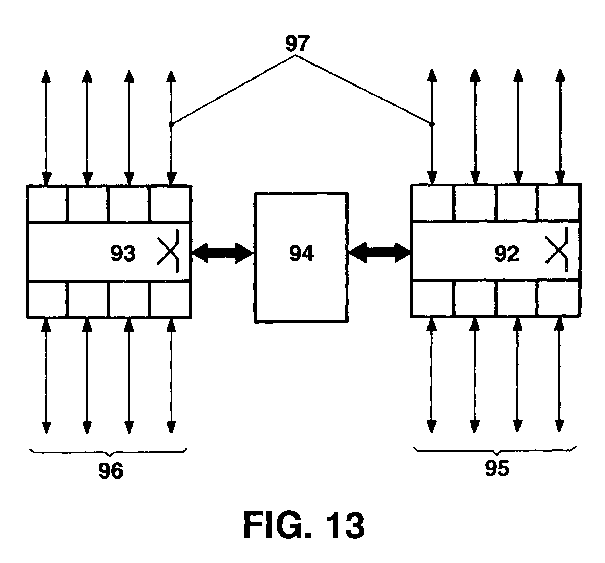

The structure of said module is shown in Fig. 13.

The module of the interconnecting network (MRI) is structured from the switching point of view in three functional blocks, namely:
- Circuit switching matrix (92) (MCC), which allows the input and output channels to be connected in accordance with a space-temporary structure (S-T), establishing a determinate circuit in the moment the request is made.
- Link switching matrix HDLC (93) (MCT), which performs the reception and transmission of HDLD links.
- Control unit (94), it is one of the receiving or generating links HDLC (high level data link control).

In each module of the interconnection network, the two types of network link(97) coexist: those of type PCM (95), and statistical type (96).

The digital control unit for electromechanical stations uses, for controlling the signal synchronism in the local network, a time base composed of three signals.

These signals are generated by a FNS module, which has a PLL (phase lock loop) which engages with one of the input clocks, and injects into the clock generated in the local network.

Due to the structure, groupped in pairs, of the FNS modules, each pair generates the clock references to the next pair, there being always a duplicity of clock signals.

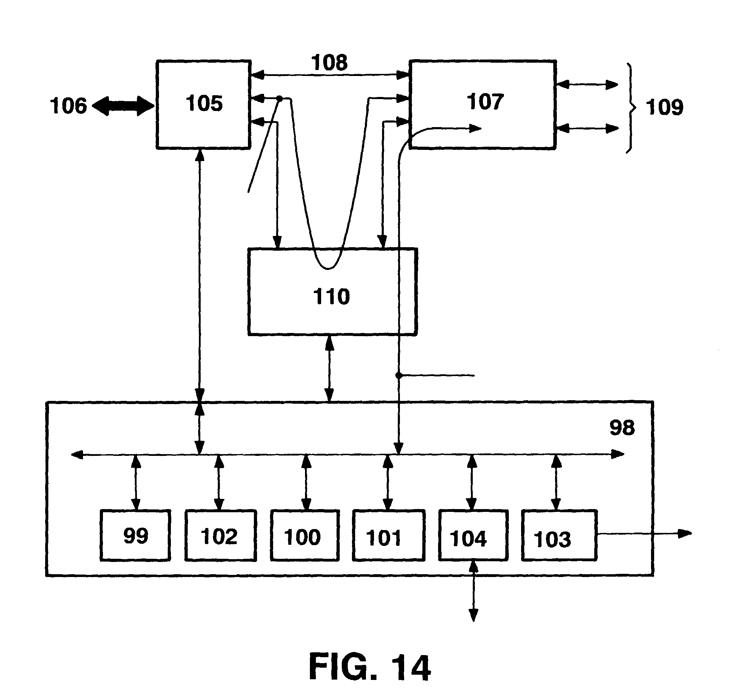

The architecture of the hardware modules of the system is unified in relation to the control blocks, and as the Fig. 14 shows, they are constituted by the following functional blocks:
- Software process unit (UPSW) (98): this block supports the software performance, and it receives and transmits the HDLC lines with an indicative of message.

This process unit is formed by a CPU (99), a RAM memory (100), an EPROM memory (101), a memory management unit (102), a physical address (103) and a peripheral management unit of the system (104).
- Unit of access to peripherals (UAP) (105): this block controls the exchange of signals with the electromechanical system (106) to which it is connected, being specific of each module, according to the task to be performed, and being fitted with processors or coprocessors, in accordance with the resources required by the corresponding mediatory element.
- Element of access to the local network (IARL) (107): this block is a communications coprocessor allowing the HDLC links to be exchanged with other modules. It also includes a resource for establishing PCM channels (108) between the UAP (105) and the local network (109).
- Communications memory (MC) (110): this block allows the information to be transferred amongst the three preceding ones, for which queue structures are used, which allows the preceding blocks to be operated according to a control strategy thru data flow. The funcional blocks communicated by this procedure, are weakly coupled, since the transmitting block of information places it on the receiver - queues, independently of the state of this block, the task of the receiver being to collect and process the information as this information arrives at the queue.

As already described, the UAP (105) manages the circuits between the systems and the electromechanical elements (106).

Said circuits accede to the electromechanical elements of the station, also called "actuation points", which, according to the nature of the electrical signals, can be divided into three types of points, anemly:
- Points of analog nature, corresponding to balanced telephone circuits.
- Points of logic nature, corresponding with control signals of the electromechanical elements.
- Points of mixed natured displaying characteristics of the preceding types in different time moments.

The points, in general, will be points of actuation and scanning, although there are only scanning points. In case of actuation, this must answer in a dynamic way in the course of the operations to be carried out, which is attained with the inclusion, in the technology circuits, of switched sources which can be configured as voltage and current sources with capacity for injecting or draining current (four-quadrant converter).

The circuits configuring the mediatory elements are protected against electrical shocks caused by the relay coils of the electromechanical - elements, as well as those capable of being caused by metereological phenomena or other type in the network.

The incorporated protections are materialized in gas dischargers and semiconductor devices, as well asagainst short-circuits in the low voltage power distribution.

The invention has a circuit assembly, mainly of hybrid nature, forming a part of the functional modules, which constitute the mediatory elements with the electromechanical equipment of the station.
- HPAE circuit (hybrid for actuation and scanning point): each circuit of this type controls an action between two actuation and scanning points, and it consists of a switched converter, with digital loop of control, and digital modulator of pulse width, capable of programming inall operating modes, which include the transfer of bidirectional power, ingoing unidirectionsl, and outgoing unidirectional.

All this is united to different protections against electrical shocks, overload, excess temperature, etc., etc.

It includes, furthermore, a facility in digital programming and digital read of the voltage and current levels at the output, for the actuation and scanning points it manages, and which are found in the station.
- HCLA circuit (hybrid for subscriber line): it is composed of two blocks: the interface circuit of subscriber loop (SLIC), and a codifying block, constituted by a COMBO, filters and A-D and D-A converters, performing hybrid functions and the digital interface.

The circuit generates the loop feed in a continuous mode, and it processes the telephone channel, so performing an analog-digital conversion.

This HCLA circuit mediates between the subscriber pair and the recorder searcher, in the local chain.
- HCLE circuit (hybrid for link line): it is composed of a adaptation transformer and a COMBO, which performs the same functions as in the case of the hybrid for subscriber line. This circuit processes the telephone channel, performing exclusively the analog-digital conversion, and is installed at the output loop of the recorder searcher interface.
- HCLU circuit (hybrid for universal line): it performs the treatment of the telephone channel, and allows, in a programed way, to feed the loop in continuous, or picking up the loop. It supports the loop interface arriving from the recorder searcher of the arrival chain, in which current links CC/MF (direct current/multifrequency), or EM/MF (E and M/multifrequency)are to be indistinctly treated. It performs the picking up of the link loop in systems where this operation is not performed by the electromechanical elements.
- HPEX circuit (hybrid of scanning points): this is a circuit which allows the voltage levels to be measured in different points in the - station.

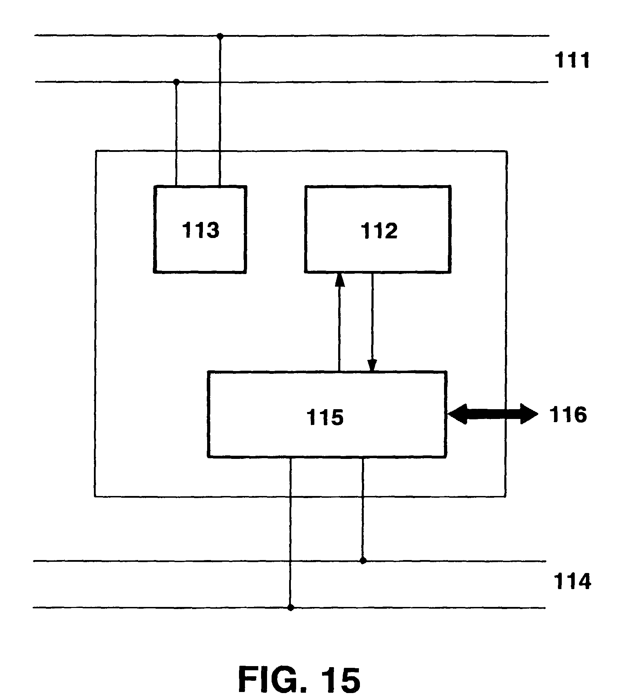

All the modules are fitted with a distributed feed, as shown in Fig. 15, which illustrates the feed distribution to the hardware modules. On the local network, two lines are distibuted: one for feeding the control functions (111), that is to say, the inner functions to the module arriving thru a converter (112), until the control circuits (113) of the module.

The other line is the power line (114), and serves to power functions (115), that is to say, the relationships with the management of the mediatory elements (116) with the electromechanical system and network functions.

The feed structure is distributed and disconnected, which, united to the disconnection provided by the network links, ensures the system with a high immunity in front of disturbances caused by the electromagnetic noise generated in the electromechanical equipment.

Since the circuits including the mediatory elements with the elements of the electromechanical station, display, for their connection, different wiring characteristics, it has been provided a mechanical and wiring design, which is constituted by the wiring interface boards (PIC), the fundamental aim of which is to adapt the signals of the hardware modules to the corresponding actuation points, fulfilling, furthermore, the requirements related to the feed distribution and the inner wiring of the digital control unit for electromechanical stations.

Each hardware functional module has one or several types of boards of PIC wiring interface associated, connected to the functional module by means of the frame panels where the following functions are installed and performed:
- Frame standardization, so that it is only required a sole type of functional frame.
- Wiring of the communications interface RS232.
- Allocation of the signals from the functional modules to the wiring thereof.
- Line and link protections,
- Treatment of the mixed nature points (logic and analogic). The mixed nature points are configured in an analogic o logic mode, by means of a switch located on the wiring interface board PIC, which is controlled by the UPSW.

This switch connects the pair terminals to a HPAE circuit, or a line or link circuit.
- HPAEs connection in parallel. It is performed when the electromechanical terminals require excitation currents higher than that programed by a sole circuit.
- They contain the HPEX for scanning the elements of the station.
- Filtration of signals in the electromechanical interface, so that the breaking extracurrents generated on the relay coils do not arrive at the hardware modules.
- Filtration of the battery feed.
Paying attention to the functional character, there are two hardware modules, denominated "SRE (recorder signaling), and CHC (connecting beam connection).

Within these modules, the hybrid circuits (HPAE, HCLA, HCLE, HCLU and HPEX) allow the electric actuation of the modules in accordance with the requirements peculiar of the points in which - they act, to be configured.

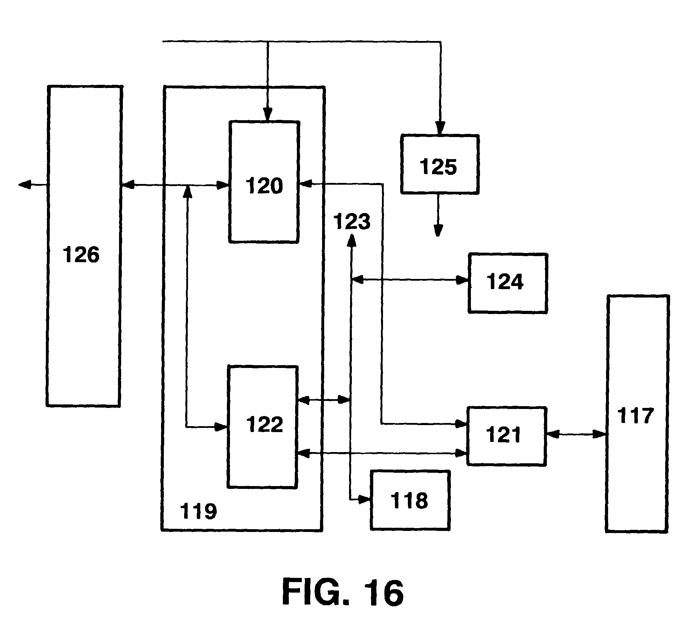

The structure of the SRE module is shown in Fig. 16, and it answers to the architecture of the system modules, in which the UPSW (117), and IARL (118) blocks are identical for all the types of modules, the UAP (119) being conformed by the hybrids, so that it includes:
- HPAE circuits (120), controlling up to 68 points, this block being controlled by the processor of the UPSW (121), which can program and read the electric conditions of the point on which is acts.
- The block of circuits of lines and links (122) equip the me - diatory elements with analog loops by using the corresponding hybrids (HCLA, HCLE and HCLU).

These circuits are controlled from the UPSW processor (121), which programs the hybrid characteristics, both in frequency and in gain.

The line and link circuit block can also read the opening or closing state of the loop, necessary for treating the call by the electronic recorder, as well as enabling the circuits so that all are in service or out of service.

These circuits are connected to the PCM inner links of the module (123), so that the digital samples of the telephone channel can be switched towards the connection network thru the IARL (118), or towards the signal digital processor (124).

The signal digital processor (124) is responsible for generating and detecting tones of signaling, both simple and multifrequencies, on the connections with the subscriber lines and the links, the signal digital processor (124) being, in turn, controlled from the UPSW (121) processor, so providing the necxessary hardware infrastructure for treating the subscriber and link signalizing.

The signal digital processor (124) is also used for generating locutions, and all the SRE modules of the system devote a part of the memory RAM of the UPSW (117) to storing locutions, these being transferred to the signal digital processor (124), which takes on the task of include them in inner PCM channels (123), from where they are injected to the corresponding analog connection.

The PCM samples can be transferred thru the connection network of the IARL (118), and from other SRE module, for which reason they can be generated on the corresponding connections, both locally and remotely.

The control feed of the UAP circuits (119) is performed by means of a DC/DC converter (125).

The UAP characteristics (119) allow the module SRE to be utilized in differect actuation points.

These variants are as follows:
- SRE-LS of local/output chain for PC-1000; equips four mediatory elements for recorder searcher, and to this end it uses four HCLA or HCLU line circuits, indistinctly, and other four HCLE link circuits as well as 68 points of actuation and scanning.
- SRE-LT of transit arrival chain for PC-1000: the configuration of this module is similar to that preceding one, with the only difference that HCLU circuits are installed.
- SRE-LS of ARF output local chain: it provides four mediatory elements for the recorder searcher, and to this end it uses four HCLA or HCLU line circuirs, and four HCLU circuits, as the ARF system requires that the output link unhooks the loop.
- SRE-LT of arrival/transit chain for ARF: it uses exclusively HCLU circuits in the link.
- SRE-DEF: it is used for interacting on the default recorder, which only requires logic type signals, and to this end it provides HPAR circuits, and on the 52 points of actuation and scanning it - serves, being completed with a HPEX circuit fitted on the corresponding PIC board.
- SRE-IDA: it takes on the task of the calling subscriber identification subsystem, provinding the 12 HPAE module in the points od actuation and scanning it serves, and on which it generates the electric levels of the track coding. This module performs the treatment of the identification links of subscriber.
- SRE-SEA: it performs a supervision of the output links and feeders inasmuch as the intake of tge beginning and the ending of a call, all this by means of HPEX circuits. The treatment of the computation wire is performed with HPAE circuits, which support the link or feeder identification, and the generation of computation pulses.

The functional character of the SRE module is completed with the corresponding PIC boards (126), which include, in necessary cases, the HPEX performing the voltage reading in points of the station.

The CHC module includes a connection with three connecting beam connection, which are composed of 23 electromechanical signals of logic type.

For this reason, the UAP of this module is composed of 69 actuation and scanning points, which are managed by the corresponding HPAEs.

The architecture of this module is similar to that of SRE, although is most simple, since it does not require any element for analogic connections.

It has the above-mentioned module associated, a PIC board performing a filtration of logic signals, a feed filtration of battery, and the RS232 interface.

The system completes its structure with boards performing auxiliary functions, such as:
- General alarms.
- Introduction of alarms in the frame.
- Introduction of alarms in the control center.

Several of these alarms are generated in an autonomous way, with no intervention on the side of the software, given its hierarchical level, as it is the case of feed failures. Nevertheless, others are generated starting from specific alarms of the system, to indicate not only the type of problems, but the urgency thereof, and to be transferred to the control center.

All these alarms are introduced by means of lamps at the corresponding frame, and, in turn, they are generated towards the exterior by means of relay contacts, in order to ensure their activation, even in front of feeding failures.

The alarm panel is supported by a board so-called "module of alarms and supervision of protections" (MASP).

This board is fitted, in general, on the feeding and supervision frame, although it can be placed also in the functional frames.

The feeding and supervision frame (CAYS) allows the feed to be distributed to the functional frames, and it contains the alarm - panel and the miscellaneous functions.

The distribution of the feeding to the functional frames is - performed from the system battery, thru a general or main disjunctor, fuses, and individual dividers per each frame.

The distribution of the feeding to the frames is performed in an independent manner for the control and power circuits.

The panel of alarms and miscellaneous functions provides bases of connector for the following functions:
- Supervision of the fuse condition.
- Programmable alarms (overload, out of service conditions, etc.)
- Remote alarms (it allows the system to be connected with the supervision panel of the station).

The digital control unit for electromechanical stations - works under environmental conditions without using ventilation equipment, the equipment being cooled by natural convection, since, in addition to the very low thermal resistance functional modules (lower than 0.1 degree/watt), it includes a high performance in the power circuits.

This last circumstance is united to a laminar ventilation which is obtained by a special arrangement of the power circuits on the boards and the existence of air deflector panels at the bottom of the frames, which send the heat produced by a frame to the exterior, without affecting the frame located at the back side.

All the electronic elements of the digital control unit for electromechanical stations are designed so that they can coexist, in a same installation, with the electromechanical elements to which they replace.

In this manner, the installation process is carried out in a progressive way, and this feature is based on the properties of the functional modules of the digital control unit for electromechanical stations.

It is not considered as necessary to extend more this description for an expert in the art to understand the scope of the invention and the advantages derived from it.

The materials, shape, size and arrangement of the components are open to variation, provided that it does not imply any alteration to the essence of the invention.

The terms under which this specification has been described should be always taken in an ample and non limitative sense.

## Claims

1. A digital control unit for electromechanical stations, which includes functional modules of an electronic recorder (51), a dafault recorder (52), a subsystem of subscriber identity (53), a supervision subsystem of links and feeders (54), a massive storage - unit (55), an operation terminal (58), and a connection with operation and maintenance structure (57), characterized in that it is constituted by groups of circuital elements intercommunicated one other (80) by means of an interconnecion network (81), so that each group of circuital elements intercommunitaced one other (80) includes a system function module (89), and several peripheral control modules (90), each of them being configured to perform the tasks of any of the functional modules of electronic recorder (51), default recorder (52), subsystem of subscriber identity (53), subsystem of supervision of links and feeders (54), and massive storage unit (55), which interact according to the programmation given with the electromechanical elements of an electromechanical telephone station.

2. A digital control unit for electromechanical stations, according to claim 1, characterized in that the functional module of the electronic recorder (51) supports a multifrequency and decadic marking in all the subscriber lines of the electromechanical station.

3. A digital control unit for electromechanical stations, according to any of the preceding claims, characterized in that the functional module of the electronic recorder (51) has logic resources capable of elaborate numbering programs, admitting up to 18 cyphers which are significative for treating said programs.

4. Digital control unit for electromechanical stations, according to the preceding claims, characterized in that the functional module of the electronic recorder (51), dedicates a part of the RAM memory (117) to the storage of locutions or expressions which communicate to the calling subscriber, in phase of dialling, messages with divers information.

5. A digital control unit for electromechanical stations, according to the preceding claims, characterized in that it has a direct connection with the operation structure (57), and other connection with an operation terminal (58).

6. A digital control unit for electromechanical stations, according to the preceding claims, characterized in that the module of the electronic recorder (51) performs, for an electromechanical - station, a link signaling ofmultifrequency 2/5 type, sending forward the identity of the calling subscriber, said identity being necessary for establishing a detailed tariff of his communications, as well as for automatizing the process of detection of ill-intentioned call.

7. A digital control unit for electromechanical stations, according to the preceding claims, characterized in that the module of the electronic recorder (51) performs, for an electromechanical station, a link signaling of multifrequency 2/6 type.

8. A digital control unit for electromechanical stations, according to the preceding claims, characterized in that the fault recorder subsistem (52) determines the identities of the elements participating in a call with erroneous treatment, as well as the cause of said process, sending the obtained information to the - operation terminal (58).

9. Digital control unit for electromechanical stations, according to the preceding claims, characterized in that the subsystem of the subscriber identity (53) manages the entries, sorties, fault detection in the line, access to services and restrictions to same according to the categories of the subscribers who depend on an - electromechanical station.

10. A digital control unit for electromechanical stations, according to the preceding claims, characterized in that the subsystem of subscriber identity (53) allows to obtain, in an electromechanical station, the identity of the calling subscriber, when picking up.

11. A digital control unit for electromechanical stations, according to the preceding claims, characterized in that the subsystem of subscriber identity (53) supervises the line dialling in the preselection and selection phases.

12. A digital control unit for electromechanical stations, according to the preceding claims, characterized in that the subsystem of supervision of links and feeders (54), the electronic recorder module (51), and the subsystem of subscriber identity (53) supervise jointly, in an electromechanical station, the links and feeders, so obtaining simultaneously the data of the calling and called subscriber, storing that information in tariff files, which are transferred by the operation terminal (58) to the system of collection of data (57).

13. A digital control unit for electromechanical stations, according to the preceding claims, characterized in that it provides and stores traffic measures per link, per destination and per route, referred to an electromechanical station, recording said information in the operation terminal (58), and transferring it to the traffic management system (57).

14. A digital control unit for electromechanical stations, according to the preceding claims, characterized in that through a feeding structure in two lines, one for control elements (111) and one for power (114), disconnected, an immunity in front of overcurrents and in front of electromagnetic noise generated in the electromechanical equipment, is ensured.

15. A digital control unit for electromechanical stations, according to the preceding claims, characterized in that in different functional modules, the circuits are installed confronting mutually their power faces and control faces, so generating a ventilation current, being configured as an equipment cooled by natural convection.

16. A digital control unit for electromechanical stations, according to the preceding claims, characterized in that, due to its modular structure, it can coexist in a same installation with the - electromechanical elements, to which it replaces, admitting a process of progressive installation.
